# EUROPEAN PATENT APPLICATION

(11) **EP 4 596 734 A1**
(43) Date of publication of application: **06.08.2025**
(21) Application number: 23871619.5
(22) Date of filing: 25.08.2023
(51) Int. Cl.: C22C 29/02, C22C 29/12, C22C 29/16, C22C 32/00, B28B 1/30, B33Y 70/10, B22F 10/34, B22F 1/05, B22F 1/12, B22F 1/14, B22F 1/148, C22C 1/05

(54) **POWDER MATERIAL FOR ADDITIVE MANUFACTURING AND METHOD FOR PRODUCING SAID POWDER MATERIAL**

(30) Priority: 29.09.2022 JP 2022156375
(71) Applicant: Fujimi Incorporated, Kiyosu-shi, Aichi 452-8502 (JP)
(72) Inventor: YAMADA, Junya, Kiyosu-shi, Aichi 452-8502 (JP); KATO, Nobuaki, Kiyosu-shi, Aichi 452-8502 (JP); KATO, Yuta, Kiyosu-shi, Aichi 452-8502 (JP)
(74) Representative: Maiwald GmbH
(86) International application number: PCT/JP2023/030766
(87) International publication number: WO 2024/070378

(57) **Abstract**

Provided is a technology that allows reduction in risk of dispersion of a powder material by application of energy in a process of additive manufacturing. The powder material for additive manufacturing disclosed herein contains a first material constituted with ceramics, and a second material constituted with at least one of magnesium (Mg), zinc (Zn), molybdenum (Mo), tungsten (W), copper (Cu), aluminum (Al), carbon (C), and silicon (Si). The powder material is constituted with composite particles including a mixture of the first material and the second material.

## Description

### [Technical Field]

The disclosure relates to a powder material for additive manufacturing. The disclosure also relates to a method of producing the powder material. This application claims priority based on Japanese Patent Application No. 2022-156375 filed on September 29, 2022, the content of which is incorporated herein by reference in its entirety.

### [Background Art]

So-called three-dimensional manufacturing technologies have become popular which create a shaped object to be produced on the basis of data of its three-dimensional shape (e.g., three-dimensional CAD data). One of such manufacturing technologies is additive manufacturing. In additive manufacturing, for example, first a powder material is thinly layered. Next, energy is applied to a predetermined region in the layer to attach or sinter the powder material to form a shape corresponding to a cross section of a shaped object to be manufactured. Then, a fresh powder material is stacked onto the attached or sintered layer, followed by application of energy. Repetition of such stacking of a powder material and application of energy can produce a desired shaped object.

As a powdered manufacturing material for additive manufacturing, a resin material has been conventionally widely used. In recent years, development has proceeded for powder materials for additive manufacturing that may be used for additive manufacturing such as powder bed fusion (PBF) and laser metal deposition (LMD) and is constituted with metal, ceramics, cermet, or the like. In this regard, Patent Document 1 exemplarily discloses a technique to produce goods containing silicon carbide as a major component using powder bed fusion. This literature proposes use of mixture powder of silicon carbide powder, metallic silicon powder, and carbon powder, with the mixture powder containing silicon carbide powder in a proportion of 60 at.% or more and less than 100 at.%. The literature describes that use of such mixture powder leads to reaction of metallic silicon powder with carbon powder in the mixture powder to form silicon carbide in a process of additive manufacturing. The literature describes that use of a powder material having such composition allows production of goods containing silicon carbide as a major component by powder bed fusion with less energy than that in conventional techniques, without use of an organic material such as resin. The literature describes that containing beforehand a predetermined amount of silicon carbide powder in the mixture powder allows suppression of rise in temperature due to reaction of metallic silicon powder with carbon powder.

### [Citation List]

### [Patent Literature]

[Patent Document 1] Japanese Patent Application Publication No. 2021-102548

### [Summary of Invention]

### [Technical Problem]

Some component materials of a powder material for additive manufacturing have a characteristic of easily dispersing at application of energy. Dispersion of a powder material may make manufacturing itself difficult, for example. Alternatively, even if a shaped object is successfully manufactured, it may have less manufacturing accuracy. Therefore, there has still been room for more improvement to increase ease of manufacturing, accuracy of additive manufacturing, and the like in a powder material for additive manufacturing.

In view of these circumstances, the present invention has an object to provide a technology that allows reduction in risk of dispersion of a powder material by application of energy in a process of additive manufacturing.

### [Solution to Problem]

To achieve the object, the inventors noticed that when additive manufacturing is carried out with use of a material that easily disperses at application of energy, such a material may be used in combination with a material capable of eliminating a cause of the material to easily disperse. The inventors earnestly investigated and consequently found that constituting a powder material with composite particles including a mixture of the two materials can result in reduction in risk of dispersion of a powder material even in application of energy, and finally completed the present invention.

The powder material for additive manufacturing disclosed herein contains a first material constituted with ceramics, and a second material constituted with at least one of magnesium (Mg), zinc (Zn), molybdenum (Mo), tungsten (W), copper (Cu), aluminum (Al), carbon (C), and silicon (Si). The powder material is constituted with composite particles including a mixture of the first material and the second material.

In such a powder material, the first material is a material that easily disperses when singly used. However, inclusion of the second material enables elimination of a cause to generate tendency of the first material to disperse. Having constitution with composite particles, the powder material has both properties of the first material and the second material in a single particle that constitutes the powder. Thus, a defect potentially generated in use of only one material can be cancelled by the other material. This allows reduction in risk of dispersion of a powder material even in application of energy.

In a preferred embodiment, the powder material disclosed herein contains granulated-sintered particles as the composite particles. Such composition can further increase an effect to reduce risk of dispersion of a powder material.

In another preferred embodiment, in the powder material disclosed herein, the particle diameter at an integrated value of 50% in a particle size distribution on volume basis based on laser diffraction scattering (D₅₀) is 100 µm or more and 250 µm or less. Such composition can provide the powder material with increased flowability in addition to an effect of the art disclosed herein.

In another preferred embodiment, in the powder material disclosed herein, the particle diameter at an integrated value of 10% in a particle size distribution on volume basis based on the laser diffraction scattering (D₁₀) is 50 µm or more, and the particle diameter at an integrated value of 90% (D₉₀) is 350 µm or less. Such composition can provide the powder material with a sharper particle size distribution in addition to an effect of the art disclosed herein.

In another preferred embodiment, the composite particles is constituted with primary particles of the first material having a particle form, and primary particles of the second material having a particle form. Such composition can provide the powder material with increased flowability in addition to an effect of the art disclosed herein.

In another preferred embodiment, the content of the first material is 10% by weight or more and 70% by weight or less, as the sum of the amounts of the first material and the second material is defined as 100% by weight. Such composition can provide an effect of the art disclosed herein and a property of the first material with balance.

In another preferred embodiment, the powder material disclosed herein has an angle of repose of 40 degree or less. Such a composition can provide the powder material with preferable flowability.

According to the art disclosed herein, disclosed is a method of producing a powder material for additive manufacturing. The method includes: providing a starting material containing a first material constituted with ceramics, a second material constituted with at least one of magnesium (Mg), zinc (Zn), molybdenum (Mo), tungsten (W), copper (Cu), aluminum (Al), carbon (C), and silicon (Si), a binder, and a solvent; preparing agglomerated particles of the first material and the second material present in the starting material thus provided; pulverizing the agglomerated particles thus prepared to provide composite particles; and classifying the composite particles thus provided to provide the composite particles with a predetermined particle diameter. Such composition can produce a powder material having reduced risk of dispersion even in application of energy in a process of additive manufacturing.

In another preferred embodiment, the production method disclosed herein further includes producing granulated-sintered particles by firing the composite particles provided by the classification. Such composition can produce a powder material with a more improved effect to reduce risk of dispersion.

In another preferred embodiment, the production method disclosed herein further includes classifying the granulated-sintered particles to provide a powder material in which the particle diameter at an integrated value of 50% in a particle size distribution on volume basis based on laser diffraction scattering (D₅₀) is 100 µm or more and 250 µm or less. Such composition can provide the powder material with a sharper particle size distribution.

In another preferred embodiment, the agglomerated particles have a particle diameter of 1 mm or more and 5 mm or less. Such composition can make production of composite particles easier.

In another preferred embodiment, classification of the composite particles provides the composite particles with a particle diameter of 100 µm or more and 250 µm or less. Such composition can provide the powder material with a sharper particle size distribution.

In another preferred embodiment, classification of the granulated-sintered particles provides the granulated-sintered particles with a particle diameter of 100 µm or more and 200 µm or less. Such composition can provide the powder material with a sharper particle size distribution.

In another preferred embodiment, the production method disclosed herein further includes producing granulated-sintered particles by firing the composite particles provided by the classification, under an inert atmosphere at a temperature derived by multiplying the melting point Tm of the first material or the second material by 0.8 to 1.1. Such composition can produce a powder material that provides an effect to increase flowability in addition to an effect of the art disclosed herein.

In a preferred embodiment, as the starting materials, a starting material containing the first material in a proportion of 10% by weight or more and 70% by weight or less relative to the sum of the amounts of the first material and the second material defined as 100% by weight is prepared. Such composition can produce a powder material that provides an effect of the art disclosed herein and a property of the first material with balance.

In a preferred embodiment, as the starting materials, a starting material containing the first material having a powder form and an average particle diameter of 1 µm or more and 60 µm or less based on laser diffraction scattering, and the second material having a powder form and an average particle diameter of 1 µm or more and 60 µm or less based on laser diffraction scattering is prepared. Such composition can better provide an effect of the art disclosed herein.

### [Brief Description of Drawings]

Fig. 1 shows a simplified schematic of a powder additive manufacturing device according to an embodiment.
Fig. 2 shows a surface SEM observation image of sample 1.
Fig. 3 shows a magnified view of Fig. 2.
Fig. 4 shows a surface SEM observation image of sample 2.
Fig. 5 shows a magnified view of Fig. 4.
Fig. 6 shows a surface SEM observation image of sample 3.
Fig. 7 shows a magnified view of Fig. 6.
Fig. 8 shows a surface SEM observation image of sample 4.
Fig. 9 shows a magnified view of Fig. 8.
Fig. 10 shows a surface SEM observation image of sample 5.
Fig. 11 shows a magnified view of Fig. 10.

### [Description of Embodiments]

Preferred embodiments of the art disclosed herein will now be described below. Matters that are other than those particularly mentioned herein but are necessary for implementation of the present invention can be recognized as matters to be designed by those skilled in the art based on conventional technologies in the art. The art disclosed herein can be implemented based on contents disclosed herein and common technical knowledge in the art. The term "X to Y" that represents a numerical range herein means "X or more and Y or less" and also a range "more than X and less than Y", a range "more than X and Y or less", and a range "X or more and less than Y", unless otherwise stated.

### <Definition>

As used herein, the term "powder material" refers to a material in a powder form used for additive manufacturing. As used herein, "composite particle" is a particle constituted with a plurality of materials differing from one another, and refers to particulate matter (having a particle shape) in which the plurality of materials are mutually bound and integrated and behave as a single particle. Examples of a composite particle include a granulated particle and a granulated-sintered particle constituted with at least two or more kinds of materials. As used herein, the term "primary particle" means a minimum unit identifiable as particulate matter from its appearance among structural components that constitutes the powder material. Accordingly, when a composite particle constituting the powder material disclosed herein contains a secondary particle, particles constituting the secondary particle can be referred to as primary particles. Herein, the term "secondary particle" refers to particulate matter in which primary particles are three-dimensionally bound and integrated and behave as a single particle. A granulated particle and a granulated-sintered particle, which is sintered after granulation, are examples of "secondary particle" herein.

The term "bind" as used herein refers to direct or indirect binding of two or more primary particles, and examples thereof include binding between primary particles by chemical reaction, binding with attraction between primary particles through simple absorption, binding with using an anchoring effect that allows an adhesive material or the like to enter bumps and dips on a surface of a primary particle, binding between primary particles with using an effect of mutual electrostatic attraction, and binding with fusing and integrating surfaces of primary particles. In regard to secondary particles constituted with two or more materials. The term 'bind'' encompasses binding in which one material constitutes primary particles while the other material fuses and integrates primary particles. As used herein, the reference to "material particles" designates particles that constitute powder at a raw material stage used for producing the powder material disclosed herein.

### <Method of Measuring Average Particle Diameter>

As used herein, "average particle diameter" associated with a powder material and primary particles that constitute secondary particles (a powder material) refers to an average particle diameter at an integrated value of 50% in a particle size distribution on volume basis measured by a particle size distribution analyzer based on laser scattering and diffraction (50% volume average particle diameter). As used herein, "average particle diameter (D₅₀)" may be referred to as "Dᵥ₅₀".

### <Method of Measuring Angle of Repose>

As used herein, the term "angle of repose" means a base angle calculated from a diameter and height of a conical sediment generated by dropping a powder material from a funnel at a certain height onto a horizontal substrate. An angle of repose can be measured in accordance with the prescription in JIS R9301-2-2:1999, "Alumina powder-Part 2: Determination of physical properties-Angle of repose".

### <Composition of Powder material>

The powder material disclosed herein contains a first material and a second material. The powder material is constituted with the first material and the second material. The proportion of the sum of the amounts of the first material and the second material in the powder material is preferably 95% by weight or more, more preferably 99% by weight or more, even more preferably 99.9% by weight or more, and can be e.g., 99.99% by weight or more.

The first material is constituted with ceramics. The kind of the ceramics should be appropriately selected corresponding to composition of a shaped object. Ceramics used as the first material is preferably, e.g., carbide ceramics, boride ceramics, nitride ceramics, and oxide ceramics.

Examples of the carbide ceramics include tungsten carbide, chromium carbide, vanadium carbide, niobium carbide, molybdenum carbide, tantalum carbide, titanium carbide, zirconium carbide, hafnium carbide, silicon carbide, and boron carbide. Examples of the boride ceramics include tungsten boride, molybdenum boride, chromium boride, vanadium boride, niobium boride, hafnium boride, zirconium boride, tantalum boride, and titanium boride. Examples of the nitride ceramics include titanium nitride, silicon nitride, aluminum nitride, and boron nitride.

Examples of the oxide ceramics include alumina, zirconia, yttria, chromia, titania, cobaltite, magnesia, beryllia, silica, calcia, ceria, ferrite, spinel, zircon, nickel oxide, silver oxide, copper oxide, zinc oxide, gallium oxide, strontium oxide, scandium oxide, samarium oxide, bismuth oxide, lanthanum oxide, lutetium oxide, hafnium oxide, vanadium oxide, niobium oxide, tungsten oxide, manganese oxide, tantalum oxide, terbium oxide, europium oxide, neodymium oxide, tin oxide, antimony oxide, antimony-doped tin oxide, indium oxide, tin-doped indium oxide, zirconium oxide aluminate, zirconium oxide silicate, hafnium oxide aluminate, hafnium oxide silicate, titanium oxide silicate, lanthanum oxide silicate, lanthanum oxide aluminate, yttrium oxide silicate, titanium oxide silicate, and tantalum oxide silicate.

The ceramics listed above may have any element doped or substituted. These ceramics may be contained singly as any one kind or in combination of two or more kinds. For example, when two or more kinds of ceramics are contained, a part or all thereof may form a composite material. Examples of such composite ceramics include yttria-stabilized zirconia, partially stabilized zirconia, gadolinium-doped ceria, lanthanum-doped lead zirconate titanate, the sialons, and the composite oxides as described above.

In particular, as ceramics used for the first material, preferably used may be silicon carbide (SiC), aluminum nitride (AlN), boron nitride (e.g., hexagonal boron nitride (h-BN)), beryllium oxide (beryllia) (BeO), and the like.

As the second material, preferably used are magnesium (Mg), zinc (Zn), molybdenum (Mo), tungsten (W), copper (Cu), aluminum (Al), carbon (C), and silicon (Si). The second material is a material having an electrical resistivity lower than that of the first material. Therefore, inclusion of the second material can cause increased electrical conductivity of the powder material. The second material is a material having a thermal conductivity of 100(W/(m•K)) or more. Therefore, inclusion of the second material can cause increased thermal conductivity of the powder material, and in turn, allow production of a shaped object having excellent thermal conductivity with use of the powder material.

The contents of the first material and the second material in the powder material can be appropriately changed corresponding to composition of a shaped object, and thus are not particularly limited. As the sum of the amounts of the first material and the second material is defined as 100% by weight, the content of the first material is, e.g., 5% by weight or more. In view of providing a shaped object with a property of the first material, the content of the first material is preferably 10% by weight or more, more preferably 15% by weight or more. By contrast, an excessive content of the first material results in, e.g., less benefit of an effect of the second material. In such a view, the content of the first material is, e.g., 95% by weight or less, preferably 90% by weight or less, more preferably 85% by weight or less.

The powder material disclosed herein is constituted with composite particles including a mixture of the first material and the second material. The proportion of the composite particles in the powder material is preferably 95% by weight or more, more preferably 99% by weight or more, even more preferably 99.9% by weight or more, and can be e.g., 99.99% by weight or more.

The composite particles may be particles produced by, e.g., mixing the first material and the second material. The composite particles are particles containing the first material and the second material, which are materials different from one another, but both materials are mutually integrated and behave as a single particle. Thus, the composite particles have both properties of the first material and the second material in a single particle, and thus a defect (e.g., dispersion) potentially generated in use of only one material can be cancelled by the other material For example, the first material has an electrical resistivity higher than that of the second material, and is considered to be charged more easily than the second material. Hence, for example, in a process of additive manufacturing, when the first material is irradiated with an electron beam, the material is charged and consequently may disperse (may be generate smoke). Meanwhile, the second material has an electrical resistivity lower than that of the first material. Hence, composite particles including a mixture of the first material and the second material have a conductive pathway formed by the second material, even the first material is charged. In this way, charging in the first material can be diminished by a conductive pathway of the second material, in turn leading to reduced risk of dispersion of the powder material at application of energy (e.g., an electron beam).

The composite particles can be produced by mixing and preparing, e.g., a first material having a powder form (hereinafter also referred to as "first powder") and a second material having a powder form (hereinafter also referred to as "second powder"). Note that the form of the composite particles is not limited thereto as long as the first material and the second material are integrated and can provide an effect of the art disclosed herein.

The composite particles may contain a granulated particle. For example, the powder material may be constituted with granulated particles. For example, granulated particles (secondary particles) can be produced by combined and mixing the first powder (primary particles) and the second powder (primary particles), and any other component (e.g., a binder and a solvent) followed by granulation.

The powder material is more preferably a powder material containing granulated-sintered particles as the composite particles. The granulated-sintered particles can be produced by preparing granulated particles from the first powder and the second powder, further followed by firing, as described above. In the granulated-sintered particles, the first powder and the second powder are integrated by firing. In the granulated-sintered particles, the first powder and the second powder are bound more tightly than in an unfired, granulated particles. Thus, in a process of additive manufacturing, secondary particles are less likely to be broken. Such a binding is provided by, e.g., fusing at least a part of the first powder or the second powder. This facilitates, e.g., delivery and receipt of an electron between the first material and the second material. For example, when an electron beam is applied as energy to the powder material, the granulated-sintered particles derived from the first powder and the second powder is more likely to have a conductive pathway formed from the first material thus charged to the second material. Therefore, constituting the powder material with the granulated-sintered particles can more increase an effect to reduce charge of the first material, and in turn more enhance an effect to reduce risk of dispersion of the powder material at application of energy (herein, an electron beam).

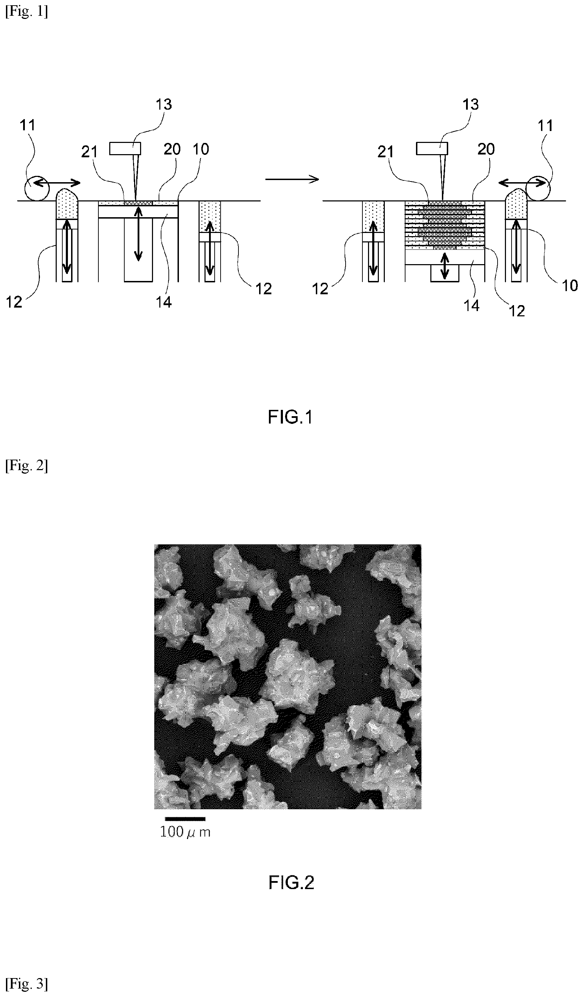

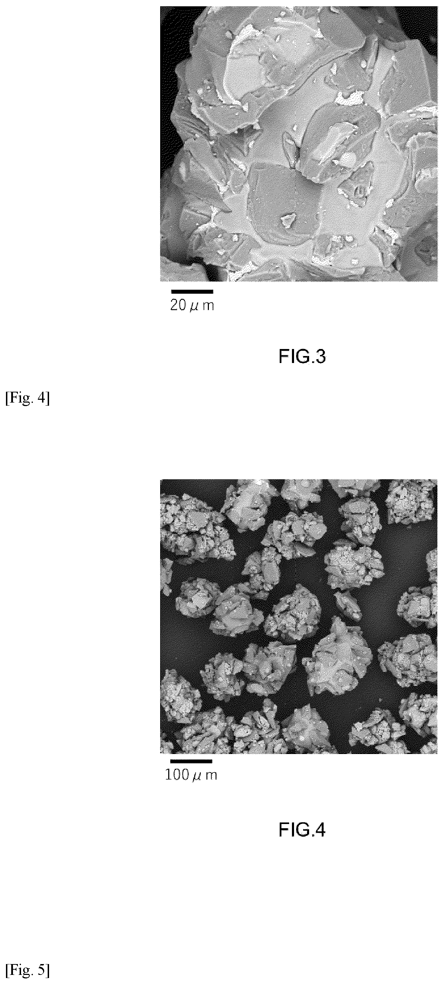

In the composite particles (herein, granulated-sintered particles), at least one of the first material and the second material has a particle form. The granulated-sintered particles may be constituted, e.g., with primary particles of the first material having a particle form, and the second material fused and solidified (see, e.g., Fig. 2 and Fig. 3). In this case, the second material can function as a binder that bounds primary particles of the first material together. In such an embodiment, for example, the first material and the second material can have an increased area of contact with each other, thus increasing an area where an electron is delivered and received between the first material and the second material. This allows reduction in risk of dispersion of the powder material at application of energy to the powder material in a process of additive manufacturing.

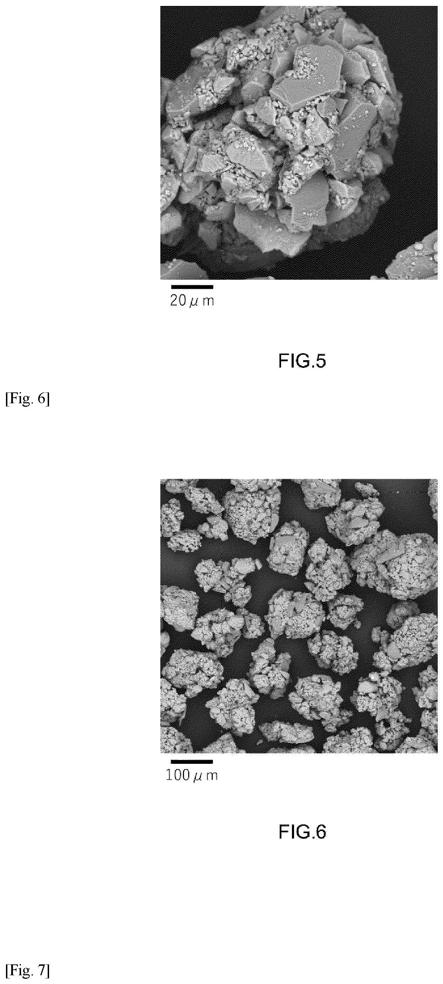

The composite particles (herein, granulated-sintered particles) are preferably constituted with primary particles of the first material having a particle form, and primary particles of the second material having a particle form (see, e.g., Fig. 4 and Fig. 5). In such an embodiment, the second material keeps a particle form in a process of producing granulated-sintered particles (herein, a firing process). This may hinder binding of secondary particles to one another. The secondary particles may thus have more globular shapes. This can provide the powder material with a sharper particle size distribution. The powder material can acquire increased flowability. This increase in flowability allows even spreading of powder on a manufacturing area and thus improvement in fineness of a shaped object. The powder material can acquire increased flowability. In other words, in the composite particles (herein, granulated-sintered particles), both the first material and the second material take particle shapes, thereby allowing providing an effect to increase evenness of a particle size distribution in addition to an effect to reduce risk of dispersion of a powder material.

The powder material disclosed herein may have an angle of repose of 40 degree or less. An angle of repose is one of indicators that have been conventionally widely employed to indicate flowability of powder. The angle of repose of the powder material can be an indicator that reflects flowability of the powder material at presence in a stock (within a feeding device) of the powder material and in stacking of the powder material from the stock (the feeding device) to a stacking area. Hence, as the angle of repose is defined smaller, the powder material can be provided with higher flowability, in turn resulting in production of a shaped object with higher productivity and uniformity. The angle of repose of the powder material is preferably 39 degree or less, more preferably 38 degree or less, even more preferably 37 degree or less. The lower limit of the angle of repose is not particularly limited, but when the angle of repose is too small, the powder material may easily disperse, or control of a feed of the powder material may be difficult. In such a view, the powder material preferably has an angle of repose of 20 degree or more.

The particle diameter of the powder material disclosed herein at an integrated value of 50% in a particle size distribution on volume basis based on laser diffraction scattering (D₅₀) (average particle diameter) is not particular limited, and can have a size conforming to the specifications of a powder additive manufacturing device to be used. The particle diameter (D₅₀) may be, e.g., 1 µm or more. As the particle diameter (D₅₀) is larger, handling in formation of the powder material and flowability of the powder material can be improved, for example. In such a view, the particle diameter (D₅₀) is suitably 5 µm or more, preferably 20 µm or more, more preferably 50 µm or more, even more preferably 70 µm or more, particularly preferably 100 µm or more, and can be 120 µm or more or 150 µm or more. By contrast, when the particle diameter (D₅₀) is too large, the powder material may have a larger stacking thickness, resulting in reduced accuracy in manufacturing. In such a view, the particle diameter (D₅₀) is, e.g., 500 µm or less, preferably 400 µm or less, more preferably 300 µm or less, even more preferably 250 µm or less, and may be 200 µm or less as required.

Without particular limitation, for example, when the powder material has a particle diameter (D₅₀) of 100 µm or more, the particle diameter (D₁₀) at an integrated value of 10% in a particle size distribution on volume basis based on laser diffraction scattering is, e.g., 50 µm or more. In view of providing the powder material with a sharper particle size distribution, the particle diameter (D₁₀) is, preferably 70 µm or more, more preferably 80 µm or more, even more preferably 90 µm or more. In the same view, the particle diameter at an integrated value of 90% in the particle size distribution (D₉₀) is, e.g., 150 µm or more, preferably 200 µm or more, or about 400 µm or less, preferably 350 µm or less. Setting the particle diameter (D₁₀), the particle diameter (D₅₀), and the particle diameter (D₉₀) within these numerical ranges can reduce risk of dispersion of the powder material and also improve fineness of a shaped object.

The powder material may contain another optional component, as long as it can provide an effect of the art disclosed herein. Examples of the optional component include a binder, a dispersant, a surfactant, an inorganic pigment, and an organic pigment.

### <Method of Producing Powder material>

The powder material disclosed herein can be produced by using the following production method.

The production method includes:
providing a starting material containing a first material, a second material, a binder, and a solvent;
preparing agglomerated particles of the first material and the second material present in the starting material thus provided;
pulverizing the agglomerated particles thus prepared to provide composite particles; and
classifying the composite particles thus provided to provide the composite particles with a predetermined particle diameter.
Performing the production method can provide a powder material with reduced risk of dispersion.

In preparation of the starting material, for example, a starting material containing the first material having a powder form (first powder), and the second material having a powder form (second powder) can be prepared as the starting material. The average particle diameter of the first powder is appropriately set corresponding to, e.g., the size, form, or the like of desired composite particles, and thus is not particularly limited. The average particle diameter of the first powder is, e.g., 1 µm or more, preferably 3 µm or more, more preferably 5 µm or more, and may be, as appropriate, 10 µm or more or 20 µm or more. As the average particle diameter is larger, handling of the first powder in formation of the powder material can be improved, and the content of the first material in a shaped object can be easily set as desired, thereby better achieving a property of the material. By contrast, when the average particle diameter is too large, it is difficult to provide composite powder in which the first material and the second material are evenly mixed. In such a view, the average particle diameter of the first powder is, e.g., 60 µm or less, preferably 50 µm, more preferably 40 µm or more.

Without particular limitation, the average particle diameter of the second powder is preferably equal to or less than the average particle diameter of the first powder. In this case, for example, in formation of composite particles, the second powder may easily enter a gap among particles constituting the first powder, thus increasing flowability of the powder material. The average particle diameter of the second powder is appropriately set corresponding to, e.g., the size, form, or the like of desired composite particles, and thus is not particularly limited. The average particle diameter of the second powder is, e.g., 1 µm or more, preferably 3 µm or more. When the second powder has an average particle diameter within these ranges, an effect to reduce risk of dispersion of a powder material can be better improved. By contrast, when the second powder has too large an average particle diameter, it is difficult to provide composite powder where the first material and the second material are evenly mixed, for example. In such a view, the average particle diameter of the second powder is, e.g., 60 µm or less, preferably 50 µm, more preferably 40 µm or more, even more preferably 30 µm or less, particularly preferably 10 µm or less.

In preparation of the starting material, the starting material can be prepared as a starting material containing the first material in a proportion within a predetermined range relative to the sum of the amounts of the first material and the second material defined as 100% by weight. The proportion of first material is preferably set e.g., in the range described for the powder material as mentioned above.

As the binder, a binder used in this kind of application can be used without particular limitation. Preferred examples of the binder for use can include nonionic water-soluble polymer compounds such as polyvinyl pyrrolidone (PVP) and polyvinyl alcohol (PVA). As the solvent, a solvent used in this kind of application can be used without particular limitation. Preferred examples of the solvent for use can include alcohol having a carbon number of 1 to 4.

As the total amount of the starting material is defined as 100% by weight, the content of the first powder and the second powder is, e.g., 10% by weight to 40% by weight. The content of the binder is, e.g., 0.1% by weight to 10% by weight (e.g., 1% by weight to 5% by weight). The solvent and an optional component (e.g., a surfactant or a dispersant) may together constitute the rest of the starting material.

In preparation of the agglomerated particles, for example, the starting material provided as mentioned above can be subjected to volatilization to remove a solvent along with mixing, thereby producing the agglomerated particles. The agglomerated particles preferably have a particle diameter of 1 mm or more and 5 mm or less (e.g., 2 mm to 3 mm). This facilitates pulverization of the agglomerated particles to a desired size, thus making production of composite particles easier. In preparation of the agglomerated particles, a tumbling fluidized bed granulator may be exemplarily preferably used as a mixing device. Use of a tumbling fluidized bed granulator enables mixing of the starting material simultaneously with compounding of the first powder and the second powder (e.g., granulation). Use of a tumbling fluidized bed granulator enables production of the agglomerated particles as described above. Hence, in production of the powder material to have e.g., an average particle diameter of 100 µm or more, a tumbling fluidized bed granulator may be particularly preferably used. The tumbling fluidized bed granulator used in the example described later is a preferred example of the mixing device.

In pulverization of the agglomerated particles, for example, the agglomerated particles can be pulverized so as to have a particle diameter larger than the average particle diameter of desired composite particles. Thus, without particular limitation, the agglomerated particles can be pulverized to provide composite particles having e.g., a particle diameter of 10 µm to 700 µm. In pulverization of the agglomerated particles, a stone mill grinder (Masscolloider^{®}) can be exemplarily preferably used as a pulverizing device. The stone mill grinder used in the example described later is a preferred example of the pulverizing device.

In classification of composite particles (hereinafter also referred to as "first classification"), classification should be made so as to provide e.g., a particle size including the average particle diameter of the powder material. Thus, without particular limitation, the first classification can provide composite particles having, e.g., a particle diameter of 1 µm to 500 µm. The particle diameter of the composite particles provided by the first classification may be, e.g., 50 µm or more, 75 µm or more, 100 µm or more, or 400 µm or less, 300 µm or less, or 250 µm or less. Performing the first classification can provide the powder material with a sharper particle size distribution.

The production method further preferably includes firing the composite particles provided by the first classification to produce granulated-sintered particles. This enables production of the powder material constituted with granulated-sintered particles. As mentioned above, presence of granulated-sintered particles as composite particles can result in an improved effect to reduce risk of dispersion of the powder material. Therefore, inclusion of a firing step in the production method can lead to production of the powder material with a more improved effect to reduce risk of dispersion. In this case, composite particles may undergo degreasing before firing of the composite particles. In the degreasing, treatment can be made e.g., at a temperature condition of 500°C under atmospheric air for about 4 hours.

Firing of composite particles is not particularly limited, but preferably performed in, e.g., inert atmosphere (e.g., rare gas atmosphere such as argon atmosphere, or nitrogen atmosphere), or in vacuum. Without particular limitation, firing time may be set to approximately 30 minutes to 10 hours. Firing temperature may be appropriately set corresponding to the kind of the first material and the kind of the second material, and thus is not particularly limited. In view of providing, e.g., an effect to reduce risk of dispersion of the powder material and preferred flowability of the powder material, firing temperature may be set to a temperature derived by multiplying the melting point Tm of the first material or the second material by 0.8 to 1.1. Firing temperature can be set to approximately 350°C to 2500°C.

In a preferred embodiment, as in the example described later, when the first material is constituted with silicon carbide (SiC) and the second material is constituted with silicon (Si), the composite particles provided by the first classification is fired at a temperature of 1300°C to 1450°C under an inert atmosphere to produce granulated-sintered particles. In this case, an effect to reduce risk of dispersion and preferred flowability of the powder material can be provided together.

In preparation of granulated-sintered particles, the production method can further include classifying granulated-sintered particles. In classification of granulated-sintered particles (hereinafter also referred to as "second classification"), for example, classification should be made so as to provide a particle size including the average particle diameter of the powder material. Thus, without particular limitation, the second classification can provide composite particles with, e.g., a particle diameter of 1 µm to 500 µm. The particle diameter of composite particles provided by the second classification may be, e.g., 50 µm or more, 75 µm or more, 100 µm or more, or 300 µm or less, 250 µm or less, or 200 µm or less. Performing the second classification enables setting of the average particle diameter of the powder material in a preferred range and also provides the powder material with a sharper particle size distribution. The average particle diameter (particle diameter (D₅₀)) of the powder material is as mentioned above and thus explanation thereof is omitted here.

The production method described above is an exemplary method of producing the powder material disclosed herein. As such a method of producing the powder material, a modification of the production method mentioned above or another production method may be employed, as long as an effect of the art disclosed herein can be provided. For example, in the production method described above, composite particles (herein, granulated particles) is produced using a tumbling fluidized bed granulator. However, the method is not limited thereto. For example, the granulated particles may be produced using spraying granulation.

### <Method of Additive Manufacturing>

The powder material disclosed herein can be used for conventional additive manufacturing. Examples of such additive manufacturing include laser powder deposition (also referred to as laser metal deposition; (LMD) and powder bed fusion (PBF). Powder bed fusion (PBF) encompasses selective laser melting (SLM) with use of laser as irradiated energy, and electron beam melting (EBM) with use of an electron beam as irradiate energy. Laser powder deposition is a technique that provides a powder material at a desired site in a structure and irradiates laser light to the site, thereby melting and solidifying the powder material to form deposition at the site (i.e., produce a shaped object). For example, when physical degradation such as wear occurs in a structure, this technique can be used to supply a material constituting the structure or a stiffener material as a powder material at the degraded site, and melt and solidify the powder material, thereby forming deposition at the degraded site. Powder bed fusion is a technique that manufactures a three-dimensional structure by forming a stack by repeating, per cross section (per slice data), operations of performing scanning with laser light or an electron beam onto a powder layer derived by deposition of a powder material, and melting and solidifying the powder layer, thereby forming a desired shape, on the basis of the slice data created from a design.

An exemplary method of producing a shaped object by powder additive manufacturing with use of the powder material disclosed herein will now be described with reference to Fig. 1. Fig. 1 shows a simplified schematic of an additive manufacturing device for powder additive manufacturing. As shown in the figure, the additive manufacturing device includes, as a general configuration, a stacking area 10, which is a space for performing additive manufacturing, a stock 12, which reserves a powder material, a wiper 11, which supports supply of the powder material to the stacking area 10, and a solidifier (an energy irradiator such as an electron beam irradiator or a laser oscillator for carbon dioxide gas laser, YAG laser, or the like) 13, which operates for solidifying the powder material. For example, the stacking area 10 has a manufacturing space surrounded on an outer periphery at a site lower than a manufacturing surface, and includes a lifting and lowering table 14, which is capable of going up and down, within the manufacturing space. The lifting and lowering table 14 is capable of descend by a predetermined thickness of Δt1, and creates a shaped object of interest on the lifting and lowering table 14. The stock 12 is arranged close to the stacking area 10, e.g., within a reserving space surrounded on an outer periphery, and includes a bottom board (lifting and lowering table) capable of going up and down by a cylinder or the like. Rise of the bottom board enables supply (extrusion) of a predetermined amount of the powder material to the manufacturing surface.

In such an additive manufacturing device, supplying a powder material layer 20 to the stacking area 10 with the lifting and lowering table 14 lowering by a predetermined thickness of Δt1 from the manufacturing surface can provide the powder material layer 20 with a predetermined thickness of Δt1. At this time, scanning with the wiper 11 on the manufacturing surface can supply the powder material extruded from the stock 12 onto the stacking area 10, and also flat a surface of the powder material, thereby forming the powder material layer 20 with uniformity. Then, for example, in the powder material layer 20 of a first layer thus formed, energy such as an electron beam or laser light can be irradiated via a solidifier 13 only to a solidifying area corresponding to slice data of the first layer, thereby melting or sintering the powder material to provide a desired cross-sectional shape, and forming a solidified powder layer 21 of the first layer.

Next, the lifting and lowering table 14 is lowered by a predetermined thickness of Δt1, and the powder material is supplied again and smoothed with the wiper 11, thereby forming the powder material layer 20 of the second layer. Then, energy is irradiated via the solidifier 13 only to a solidifying area corresponding to slice date of the second layer of the powder material layer 20, thereby solidifying the powder material to form the solidified powder layer 21 of the second layer. At that time, the solidified powder layer 21 of the second layer and the solidified powder layer 21 of the first layer, which is a lower layer, are integrated to form a stack up to the second layer. Subsequently, the lifting and lowering table 14 is lowered by a predetermined thickness of Δt1 to form a new powder material layer 20, and energy is irradiated via the solidifier 13 to form the solidified powder layer 21 only at a required site. Thus, by repeating these steps, the additive manufacturing device can produce a three-dimensional shaped object of interest on the basis of slice data created from a design prepared beforehand (3D CAD data).

As described so far, the powder material disclosed herein is constituted with composite particles including a mixture of a first material and a second material. The second material is a material having an electrical resistivity lower than that of the first material, as described above. For example, even when application of energy provides the first material with charge, a conductive pathway formed by the second material causes the charge to be diminished, and in turn allows reduction in risk of dispersion of a powder material. Without particular limitation, the powder material disclosed herein can thus be particularly preferably used in electron beam melting (EBM), in which an electron beam is applied as energy.

The art disclosed herein includes the following items 1 to 15.

### Item 1

A powder material for additive manufacturing, containing:
a first material constituted with ceramics, and
a second material constituted with at least one of magnesium (Mg), zinc (Zn), molybdenum (Mo), tungsten (W), copper (Cu), aluminum (Al), carbon (C), and silicon (Si),
the powder material being constituted with composite particles including a mixture of the first material and the second material.

### Item 2

The powder material set forth in the item 1, containing granulated-sintered particles as the composite particles.

### Item 3

The powder material set forth in the item 1 or 2, wherein the particle diameter at an integrated value of 50% in a particle size distribution on volume basis based on laser diffraction scattering (D₅₀) is 100 µm or more and 250 µm or less.

### Item 4

The powder material set forth in any one of the items 1 to 3, wherein the particle diameter at an integrated value of 10% in a particle size distribution on volume basis based on the laser diffraction scattering (D₁₀) is 50 µm or more, and wherein the particle diameter at an integrated value of 90% (D₉₀) is 350 µm or less.

### Item 5

The powder material set forth in any one of the items 1 to 4, wherein the composite particles is constituted with primary particles of the first material having a particle form, and primary particles of the second material having a particle form.

### Item 6

The powder material set forth in any one of the items 1 to 5, wherein the content of the first material is 10% by weight or more and 70% by weight or less as the sum of the amounts of the first material and the second material is defined as 100% by weight.

### Item 7

The powder material set forth in any one of the items 1 to 6, having an angle of repose of 40 degree or less.

### Item 8

A production method of a powder material for additive manufacturing including:
providing a starting material containing a first material constituted with ceramics, a second material constituted with at least one of magnesium (Mg), zinc (Zn), molybdenum (Mo), tungsten (W), copper (Cu), aluminum (Al), carbon (C), and silicon (Si), a binder, and a solvent;
preparing agglomerated particles of the first material and the second material present in the starting material thus provided;
pulverizing the agglomerated particles thus prepared to provide composite particles; and
classifying the composite particles thus provided to provide the composite particles with a predetermined particle diameter.

### Item 9

The production method set forth in the item 8, further including producing granulated-sintered particles by firing the composite particles provided by the classifying.

### Item 10

The production method set forth in the item 9, further including classifying the granulated-sintered particles to provide a powder material in which the particle diameter at an integrated value of 50% in a particle size distribution on volume basis based on laser diffraction scattering (D₅₀) is 100 µm or more and 250 µm or less.

### Item 11

The production method set forth in any one of the items 8 to 10, wherein the agglomerated particles have a particle diameter of 1 mm or more and 5 mm or less.

### Item 12

The production method set forth in any one of the items 8 to 11, wherein the classifying the composite particles provides the composite particles with a particle diameter of 100 µm or more and 250 µm or less.

### Item 13

The production method set forth in the item 10, wherein the classifying the granulated-sintered particles provides the granulated-sintered particles with a particle diameter of 100 µm or more and 200 µm or less.

### Item 14

The production method set forth in any one of the items 8 to 13, wherein as the starting materials, a starting material containing the first material is added in a proportion of 10% by weight or more and 70% by weight or less relative to the sum of the amounts of the first material and the second material defined as 100% by weight is prepared.

### Item 15

The production method set forth in any one of the items 8 to 14, wherein as the starting materials, a starting material containing the first material having a powder form and an average particle diameter of 1 µm or more and 60 µm or less based on laser diffraction scattering, and the second material having a powder form and an average particle diameter of 1 µm or more and 60 µm or less based on laser diffraction scattering is prepared.

### [Examples]

Examples relating to the present invention will be described below, but the present invention is not intended to be limited to the embodiments shown in the examples below. In the following description, "%" is on a weight basis unless otherwise specified.

### <Production Example>

### (Sample 1)

A starting material was provided that contained silicon carbide (SiC) powder having an average particle diameter D₅₀ of 30 µm as a first material (primary particles), silicon (Si) powder having an average particle diameter D₅₀ of 5 µm as a second material (primary particles), polyvinyl pyrrolidone (PVP) as a binder, alcohol (ethanol) as a solvent. Incidentally, SiC powder and Si powder were blended in such a manner that the proportion of SiC powder was 65% while the proportion of Si powder was 35%, as the sum of the amounts of both powder was defined as 100%. The proportion of carbon (C) content was 19.6%, as the sum of the amounts of SiC powder and Si powder was defined as 100%. Relative to a material used, PVP was 3%, and alcohol was 20%.

Subsequently, the starting material was charged in an agitating tumbling granulator (Henschel mixer) and mixed (rotation rate: 1,300 rpm) to produce agglomerated particles of SiC powder and Si powder present in the starting material (particle diameter: 1 mm to 3 mm). As the agitating tumbling granulator, the device "FM mixer" manufactured by Nippon Coke & Engineering Co., Ltd. was used. Subsequently, the agglomerated particles were disintegrated using a stone mill grinder (roration speed: 1,000 rpm) to provide composite particles having a particle diameter of about 500 µm. As the stone mill grinder, the device "Super Masscolloider^{®}" manufactured by Masuko Sangyo Co., Ltd. was used. Then, the composite particles thus obtained was classified using a vibrating sieve device. In the classification, a mesh having an opening of 212 µm and a mesh having an opening of 106 µm were used to provide composite particles having a particle diameter of 106 µm to 212 µm.

Then, the composite particles derived by classification was subjected to degreasing by firing at 500°C under atmospheric air for 4 hours. The degreased composite particles was fired at 1450°C under an argon atmosphere for 2 hours. Such firing yielded granulated-sintered particles. Then, the granulated-sintered particles thus obtained was classified using a vibrating sieve device. In the classification, a mesh having an opening of 180 µm and a mesh having an opening of 106 µm were used to provide granulated-sintered particles having a particle diameter of 106 µm to 180 µm. In this way, a powder material constituted with granulated-sintered particles (secondary particles) was produced. This powder material is defined as sample 1 according to the production example.

### (Sample 2)

In a starting material, SiC powder and Si powder were blended in such a manner that the proportion of SiC powder was 48% while the proportion of Si powder was 52%, as the sum of the amounts of both powder was defined as 100%. The proportion of carbon (C) content was 15.5%, as the sum of the amounts of SiC powder and Si powder was defined as 100%. Firing of composite particles after degreasing was performed at 1400°C under an argon atmosphere for 2 hours. Except for these, the same materials and processes as for sample 1 were used to produce the powder material of sample 2.

### (Sample 3)

In a starting material, SiC powder and Si powder were blended in such a manner that the proportion of SiC powder was 17% while the proportion of Si powder was 83%, as the sum of the amounts of both powder was defined as 100%. The proportion of carbon (C) content was 5.2%, as the sum of the amounts of SiC powder and Si powder was defined as 100%. Firing of composite particles after degreasing was performed at 1450°C under an argon atmosphere for 2 hours. Except for these, the same materials and processes as for sample 1 were used to produce the powder material of sample 3.

### (Sample 4)

In a starting material, SiC powder and Si powder were blended in such a manner that the proportion of SiC powder was 51% while the proportion of Si powder was 49%, as the sum of the amounts of both powder was defined as 100%. The proportion of carbon (C) content was 15.3%, as the sum of the amounts of SiC powder and Si powder was defined as 100%. Firing of composite particles after degreasing was performed at 1430°C under an argon atmosphere for 2 hours. Except for these, the same materials and processes as for sample 1 were used to produce the powder material of sample 4.

### (Sample 5)

A starting material was provided using SiC powder (primary particles) having an average particle diameter D₅₀ of 5 µm as a first material. In the starting material, SiC powder and Si powder were blended in such a manner that the proportion of SiC powder was 51% while the proportion of Si powder was 49%, as the sum of the amounts of both powder was defined as 100%. The proportion of carbon (C) content was 15.4%, as the sum of the amounts of SiC powder and Si powder was defined as 100%. Firing of composite particles after degreasing was performed at 1430°C under an argon atmosphere for 2 hours. Except for these, the same materials and processes as for sample 1 were used to produce the powder material of sample 5.

### (Sample 6)

A mixture powder prepared by mixing SiC powder having an average particle diameter D₅₀ of 30 µm and Si powder having an average particle diameter D₅₀ of 5 µm was provided as sample 6 in the production example. Both powders were blended in such a manner that the proportion of SiC was 48% while the proportion of Si powder was 52%, as the whole amount of the mixture powder was defined as 100%. The proportion of carbon (C) content was 14.5%, as the sum of the amounts of SiC powder and Si powder was defined as 100%.

### [Measurement of Total Carbon (C) Content]

The powder materials of sample 1 to sample 6 were measured for the total C content (the whole C content) using a carbon-sulfur analyzer (EMIA: manufactured by HORIBA, Ltd.). The total C content thus obtained was defined as a content of C originated from SiC.

### [Measurement particle size distribution]

The powder materials of sample 1 to sample 6 were measured for a particle size distribution on volume basis using a laser diffraction/scattering particle size analyzer (LA-300, manufactured by HORIBA, Ltd.). The values of Dᵥ₁₀, Dᵥ₅₀, and Dᵥ₉₀ are shown in corresponding columns in Table 1.

### [Angle of Repose ]

The powder materials of sample 1 to sample 6 were measured for an angle of repose in accordance with JIS R9301-2-2:1999. The angle of repose is a value derived by applying each of the powder materials to an A.B.D. powder property measuring instrument (model ABD-72, manufactured by Tsutsui Physical and Chemical Instruments Co., Ltd.) The value of the angle of repose thus measured is shown in corresponding column in Table 1.

### [SEM Observation]

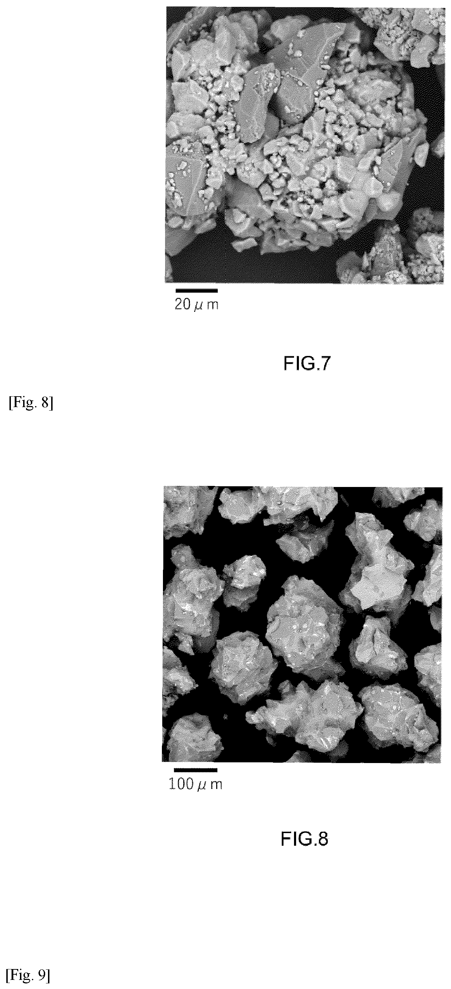

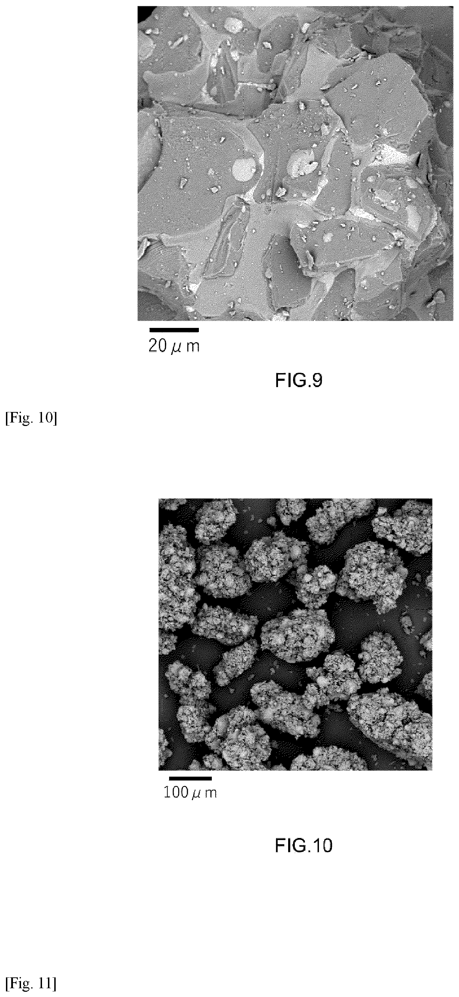

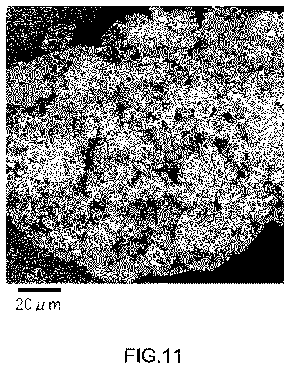

For the powder materials of sample 1 to sample 6, planar view images were obtained using a desktop SEM (Phenom ProX, manufactured by Phenom-World B.V.) For reference, surface SEM observation images of samples 1 to 5 are shown in Figs. 2 to 11. Fig. 2 shows a surface SEM observation image of sample 1. Fig. 3 shows a magnified view of Fig. 2. Fig. 4 shows a surface SEM observation image of sample 2. Fig. 5 shows a magnified view of Fig. 4. Fig. 6 shows a surface SEM observation image of sample 3. Fig. 7 shows a magnified view of Fig. 6. Fig. 8 shows a surface SEM observation image of sample 4. Fig. 9 shows a magnified view of Fig. 8. Fig. 10 shows a surface SEM observation image of sample 5. Fig. 11 shows a magnified view of Fig. 10. Scale bars in Fig. 2, Fig. 4, Fig. 6, Fig. 8, and Fig. 10 indicate 100 µm. The observing magnification was 400-fold. Scale bars in Fig. 3, Fig. 5, Fig. 7, Fig. 9, and Fig. 11 indicate 20 µm. The observing magnification was 2000-fold.

### [Volume Resistivity]

The powder materials of sample 2 and sample 6 were measured for volume resistivity (Ω•cm) using a powder resistivity measuring device (powder resistivity measuring system MCP-PD51, manufactured by Nittoseiko Analytech Co., Ltd.) In this measurement, each sample was weighed and introduced into a powder resistance measuring probe unit (low resistance probe for powder MCP-PD511, manufactured by Nittoseiko Analytech Co., Ltd.) Subsequently, each sample was pressurized using a hydraulic pump equipped in the device. Then, the volume resistivity of each sample at application of a load of 4 kN to the sample was measured using a low resistance meter (low resistance meter Loresta GP, manufactured by Nittoseiko Analytech Co., Ltd.) The value of the volume resistivity thus measured is shown in corresponding column in Table 1. The sign "-" in the corresponding column in Table 1 denotes that measurement of volume resistivity was not performed.

### [Table 1]

**Table 1**

| | | First powder | | | Second powder | | | Physical properties | | | | | |
|---|---|---|---|---|---|---|---|---|---|---|---|---|---|
| | | kind | Average particle diameter (µm) | Content proportion^{*1} (%) | kind | Average particle diameter (µm) | Content proportion^{*1} (%) | Total C content (%) | Dv10% (µm) | Dv50% (µm) | Dv90 % (µm) | Angle of repose (degree) | Volume resistivity (Ω·cm) |
| Sample 1 | Granulated-sintered powder | SiC | 30 | 65 | Si | 5 | 35 | 19.6 | 122 | 193 | 322 | 40 | - |
| Sample 2 | | | 30 | 48 | | 5 | 52 | 15.5 | 117 | 177 | 290 | 34 | 31 |
| Sample 3 | | | 30 | 17 | | 5 | 83 | 5.2 | 109 | 165 | 273 | 33 | - |
| Sample 4 | | | 30 | 51 | | 5 | 49 | 15.3 | 133 | 202 | 329 | 36 | - |
| Sample 5 | | | 5 | 51 | | 5 | 49 | 15.4 | 112 | 171 | 283 | 36 | - |
| Sample 6 | mixed powder | | 30 | 48 | | 5 | 52 | 14.5 | - | - | - | - | 9.9x10⁴ |

| | | | | | | | | | | | | | |
|---|---|---|---|---|---|---|---|---|---|---|---|---|---|
| *1: content proportion as the total of the amounts of first powder and second powder is defined as 100% | | | | | | | | | | | | | |

The results shown in Table 1 reveals that sample 3, which was derived by compounding a first material and a second material, had a volume resistivity 33,000-fold reduced relative to the volume resistivity of sample 6, which was derived by mixing the first material and the second material. This has suggested that a powder material containing a first material (herein, SiC powder) and a second material (herein, Si powder) and constituted with composite particles including a mixture of the first material and the second material can result in reduced risk of dispersion at application of energy in a process of additive manufacturing.

It has been demonstrated that a powder material for additive manufacturing with reduced risk of dispersion can be produced by performing a production method including: providing a starting material containing a first material, a second material, a binder, and a solvent; preparing agglomerated particles of the first material and the second material present in the starting material; pulverizing the agglomerated particles to provide composite particles; and classifying the composite particles to provide the composite particles with a predetermined particle diameter.

### [Reference Signs List]

- 10: stacking area
- 11: wiper
- 12: stock
- 13: solidifier
- 14: lifting and lowering table
- 20: powder material layer
- 21: solidified powder layer

## Claims

1. A powder material for additive manufacturing, comprising:
a first material constituted with ceramics, and
a second material constituted with at least one of magnesium (Mg), zinc (Zn), molybdenum (Mo), tungsten (W), copper (Cu), aluminum (Al), carbon (C), and silicon (Si),
the powder material being constituted with composite particles comprising a mixture of the first material and the second material.

2. The powder material according to claim 1, comprising granulated-sintered particles as the composite particles.

3. The powder material according to claim 1 or 2, wherein the particle diameter at an integrated value of 50% in a particle size distribution on volume basis based on laser diffraction scattering (D₅₀) is 100 µm or more and 250 µm or less.

4. The powder material according to claim 3, wherein the particle diameter at an integrated value of 10% in a particle size distribution on volume basis based on the laser diffraction scattering (D₁₀) is 50 µm or more, and wherein the particle diameter at an integrated value of 90% (D₉₀) is 350 µm or less.

5. The powder material according to claim 1 or 2, wherein the composite particles is constituted with primary particles of the first material having a particle form, and primary particles of the second material having a particle form.

6. The powder material according to claim 1 or 2, wherein the content of the first material is 10% by weight or more and 70% by weight or less as the sum of the amounts of the first material and the second material is defined as 100% by weight.

7. The powder material according to claim 1 or 2, having an angle of repose of 40 degree or less.

8. A production method of a powder material for additive manufacturing comprising:
providing a starting material comprising a first material constituted with ceramics, a second material constituted with at least one of magnesium (Mg), zinc (Zn), molybdenum (Mo), tungsten (W), copper (Cu), aluminum (Al), carbon (C), and silicon (Si), a binder, and a solvent;
preparing agglomerated particles of the first material and the second material present in the starting material thus provided;
pulverizing the agglomerated particles thus prepared to provide composite particles; and
classifying the composite particles thus provided to provide the composite particles with a predetermined particle diameter.

9. The production method according to claim 8, further comprising producing granulated-sintered particles by firing the composite particles provided by the classifying.

10. The production method according to claim 9, further comprising classifying the granulated-sintered particles to provide a powder material in which the particle diameter at an integrated value of 50% in a particle size distribution on volume basis based on laser diffraction scattering (D₅₀) is 100 µm or more and 250 µm or less.

11. The production method according to any one of claims 8 to 10, wherein the agglomerated particles have a particle diameter of 1 mm or more and 5 mm or less.

12. The production method according to any one of claims 8 to 10, wherein the classifying the composite particles provides the composite particles with a particle diameter of 100 µm or more and 250 µm or less.

13. The production method according to claim 10, wherein the classifying the granulated-sintered particles provides the granulated-sintered particles with a particle diameter of 100 µm or more and 200 µm or less.

14. The production method according to any one of claims 8 to 10, wherein as the starting materials, a starting material comprising the first material in a proportion of 10% by weight or more and 70% by weight or less relative to the sum of the amounts of the first material and the second material defined as 100% by weight is prepared.

15. The production method according to any one of claims 8 to 10, wherein as the starting materials, a starting material comprising the first material having a powder form and an average particle diameter of 1 µm or more and 60 µm or less based on laser diffraction scattering, and the second material having a powder form and an average particle diameter of 1 µm or more and 60 µm or less based on laser diffraction scattering is prepared.
